(19) Europäisches Patentamt

European Patent Office

Office européen des brevets

(11) Veröffentlichungsnummer: **0 198 410 B1**

(12) **EUROPÄISCHE PATENTSCHRIFT**

(45) Veröffentlichungstag der Patentschrift: **02.01.92**

(21) Anmeldenummer: **86104840.3**

(22) Anmeldetag: **09.04.86**

(51) Int. Cl.⁵: **B29C 45/17**

(54) Spritzgiessmaschine für Kunststoffe.

(30) Priorität: **15.04.85 DE 3513410**
**28.01.86 DE 3602439**

(43) Veröffentlichungstag der Anmeldung:
**22.10.86 Patentblatt 86/43**

(45) Bekanntmachung des Hinweises auf die
Patenterteilung:
**02.01.92 Patentblatt 92/01**

(84) Benannte Vertragsstaaten:
**AT CH DE FR GB IT LI NL**

(56) Entgegenhaltungen:
**EP-A- 0 069 221**
**DE-A- 1 554 768**
**DE-A- 3 229 223**
**FR-A- 2 299 960**
**US-A- 3 596 326**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche**
**24**
**W-7530 Pforzheim(DE)**

## Beschreibung

Die Erfindung bezieht sich auf eine Spritzgießmaschine entsprechend dem Oberbegriff des Patentanspruches 1.

Bei einer bekannten Spritzgießmachine dieser Art (DE-OS 15 54 768) ist der Plastifizierzylinder mitsamt seinem Trägerblock und einem den Trägerblock tragenden Teil des Maschinenfußes um eine vertikale Achse schwenkbar gelagert. Auch beim Schwenkvorgang und in extremer Schwenkposition (Fig. 2 der genannten Druckschrift) ist der Plastifizierzylinder gießformseitig rollend abgestützt. Eine Befreiung des Plastifizierzylinders aus den Zentrierlagern des Trägerblockes etwa im Rahmen eines automatischen Gießformwechsels ist weder vorgesehen noch möglich. Eine Trennung des Plastifizierzylinders von dem Trägerblock ist nur durch eine entsprechende Demontage erreichbar.

Bei einer weiteren bekannten Spritzgießmaschine dieser Art (DE 29 07 557 C2) besteht das Stützorgan aus zwei schellenförmigen Formstükken, die miteinander durch eine lösbare Spanneinrichtung verbunden sind. Der Stützring ist über beidseitige, horizontale Spannfortsätze der Formstücke mittels Gleitbüchsen auf stationären Säulen verschiebbar gelagert, die insoweit das erste Lager bilden.

Es ist auch bekannt (DE-OS 32 29 223) bei einer Kunststoff-Spritzgießmaschine die Voraussetzungen für einen automatischen Wechsel der aus Plastifizierzylinder und Förderschnecke bestehenden Plastifiziereinheit durch computergesteuerte Kupplungen an Plastifizierzylinder und Förderschnecke zu schaffen. Dabei bildet jedoch der Plastifizierzylinder mit dem Trägerblock eine bauliche Einheit, die als Ganzes zur Auswechslung bestimmt und geeignet ist. Beim Wechsel der Plastifiziereinheit ist es demzufolge erforderlich, zunächst die Zufuhreinrichtung für das Kunststoffmaterial vom Trägerblock abzunehmen und sodann die aus Plastifizierzylinder und Trägerblock bestehende bauliche Einheit vom restlichen Aggregat der Spritzgießeinheit abzukuppeln und abzutransportieren.

Schließlich ist es auch bekannt, den Plastifizierzylinder einer Kunststoff-Spritzgießmaschine mit einer Abdeckung vollständig zu umschließen, welcher Plastifizierzylinder nur durch Demontage von seinem Trägerblock gelöst werden kann (US-PS 3,068,521).

Bekannt ist es auch, den Plastifizierzylinder einer Kunststoff-Spritzgießsmaschinean seinem rückwärtigen Ende mit einer Ringnut für den Eingriff eines Verbindungsmittels zu versehen, welches Verbindungsmittel jedoch der festen Montage dient und daher durch das Programm des Computers nicht lösbar ist.

Der Erfindung liegt die Aufgabe zugrunde, eine Kunststoff-Spritzgießmaschine der eingangs genannten Gattung derart weiterzubilden, daß eine bessere Abstützung des Plastifizierzylinders mit geringerem technischen Aufwand erreichbar ist und daß für einen weitgehend nach Programm computergesteuerten Wechsel die aus Plastifizierzylinder und Förderschnecke bestehenden Plastifiziereinheit nach Absetzen von der Spritzgießform und nach Befreiung aus ihrem Trägerblock in stabiler Lage auf Stützlagern gehalten und sodann ohne manuelle Lösungsmanipulationen von diesen Stützlagern abgenommen werden kann.

Diese Aufgabe wird durch die Merkmale des Patentanspruches 1 gelöst.

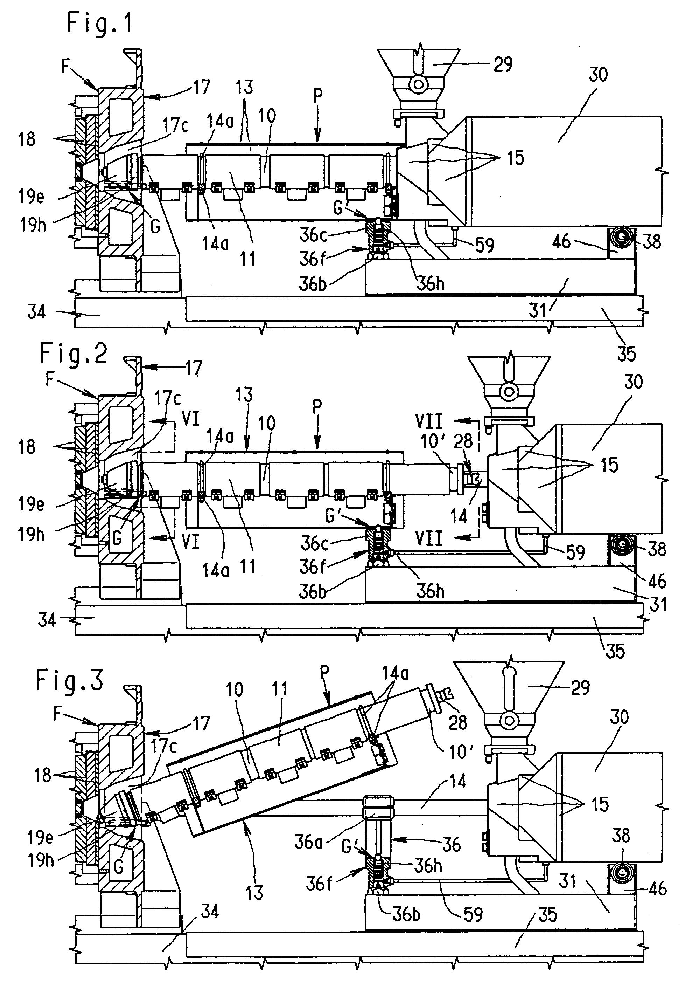

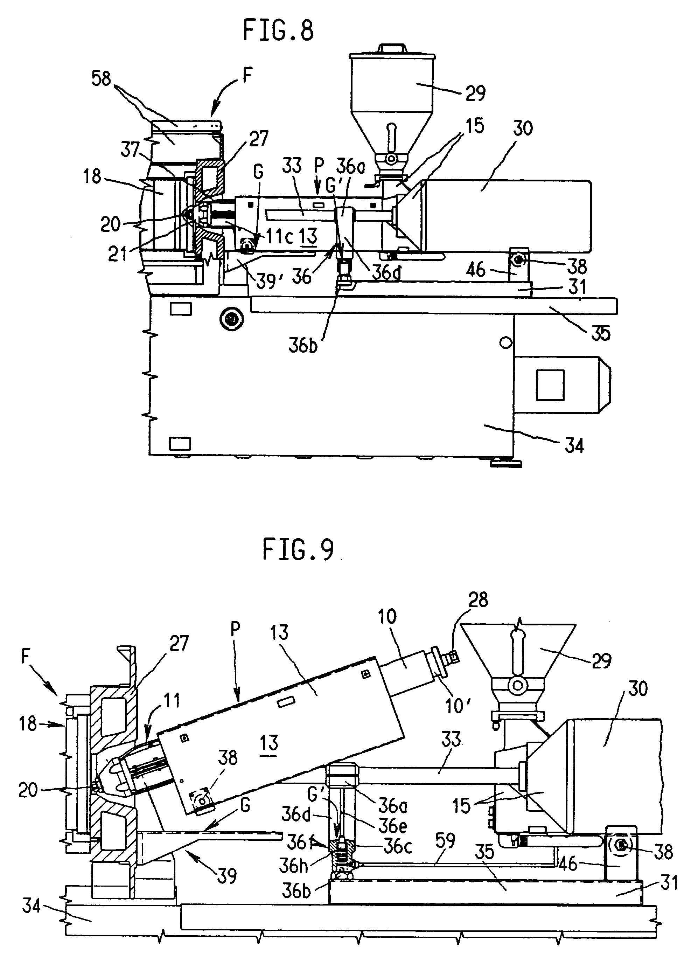

Besondere Ausführungsarten der Erfindung sind in den Patentansprüchen 2 bis 7 angegeben. Bei einer solchen Ausbildung ergibt sich zudem der Vorteil, daß der rückseitig vom Trägerblock befreite Plastifizierzylinder im Bedarfsfalle unter Kippen um eine senkrecht zur Spritzachse verlaufenden Achse abtransportiert werden kann (Fig. 3,9).

Nachstehend wird die Erfindung anhand der Zeichnung an Absführungsbeispielen erläutert.

Es zeigen in einem ersten Ausführungsbeispiel (Fig. 1-7)

| | |
|---|---|
| Fig. 1,2 | Ausschnitte aus der Kunststoff-Spritzgießmaschine bei von der Spritzgießform abgesetzter Spritzgießeinheit nach rückseitiger Freisetzung des Plastifizierzylinders aus dem Trägerblock, |
| Fig. 3 | einen Ausschnitt entsprechend den Fign. 1,2 beim Abtransport der Plastifiziereinheit, |
| Fig. 4 | den stationären Formträger der Kunststoff-Spritzgießmaschine mit dem ersten Stützlager in perspektivischer Darstellung, |
| Fig. 5 | das gießformseitige Ende des Plastifizierzylinders teilweise im Vertikalschnitt in vergrößerter Darstellung, |
| Fig. 6 | einen Schnitt nach Linie VI-VI von Fig. 2 (in vergrößerter Darstellung), |
| Fig. 7 | einen Schnitt nach Linie VII-VII von Fig. 2 (in vergrößerter Darstellung). |

In weiteren Ausführungsbeispielen zeigen:

| | |
|---|---|
| Fig. 8 | einen Ausschnitt aus der Kunststoff-Spritzgießmaschine in Seitenansicht, |
| Fig. 9 | einen Ausschnitt gemäß Fig. 8 bei Auswechslung der Plastifiziereinheit, |
| Fig. 10 | den teilweise vertikal geschnittenen Plastifizierzylinder in größe |

rem Maßstab,

Fig. 11 den Plastifizierzylinder gemäß Fig. 10 von hinten mit dem zugehörigen stationären Formträger und dem ersten Stützlager in vergrößerter Darstellung,

Fig. 12 den vorderen Teil der Anordnung gemäß Fig. 11 in Seitenansicht,

Fig. 13-22 Varianten der Anordnung gemäß den Fign. 11,12 je in einer diesen Figuren entsprechenden Darstellung und

Fig. 23,24 eine weitere Variante der schematisch dargestellten Kunststoffspritzgießmaschine in Seitenansicht und Draufsicht (Fig. 24 ist nach Linie XXIV-XXIV von Fig. 23 aufgeschnitten).

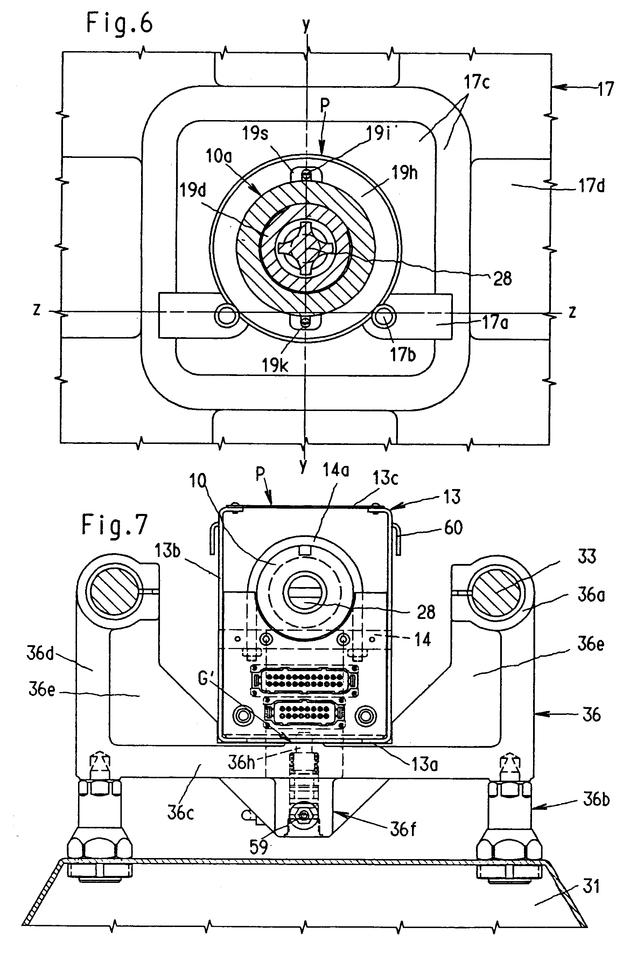

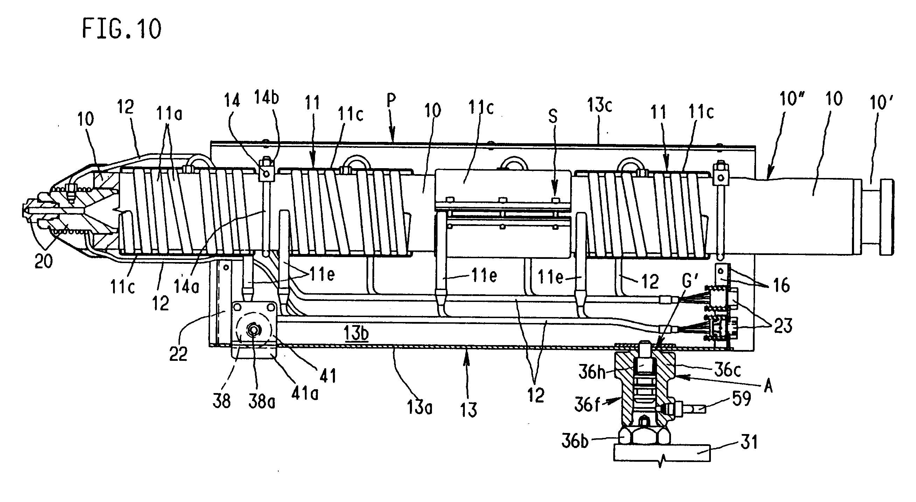

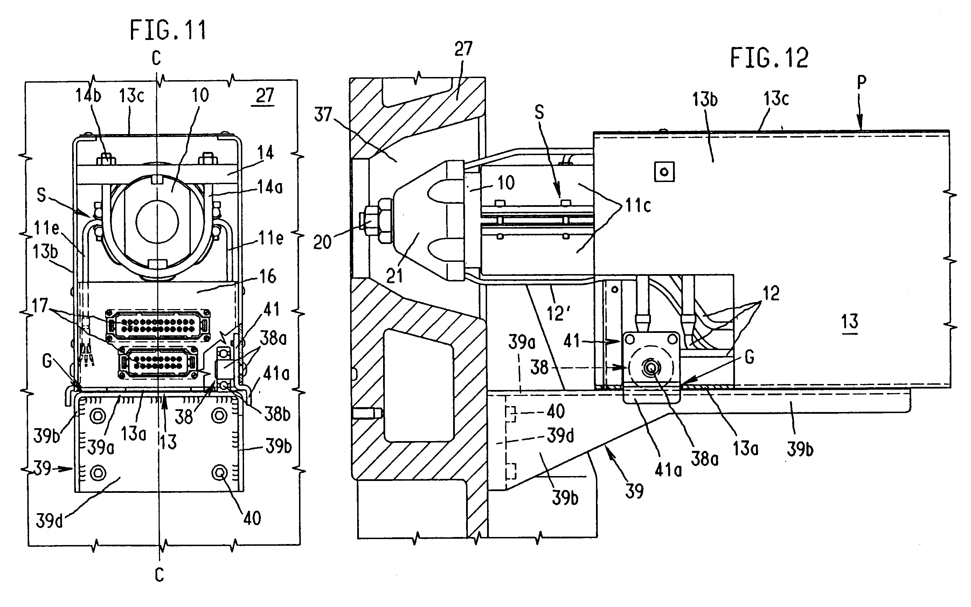

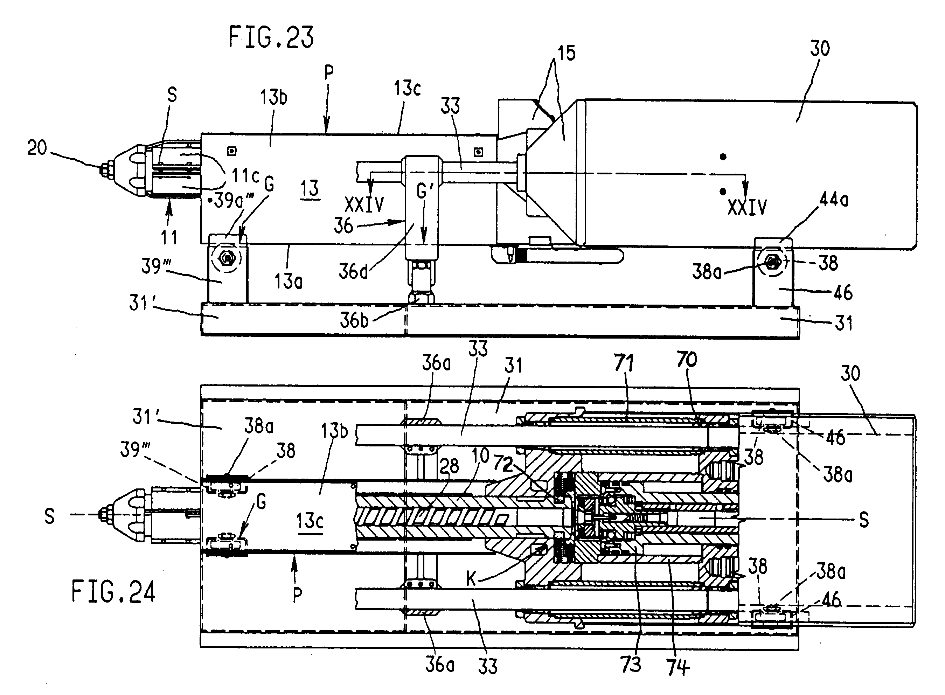

Allen Ausführungsbeispielen ist folgendes gemeinsam: Auf dem Maschinenfuß 34 mit Tankdeckel 35 ist eine Formschließeinheit F und eine Spritzgießeinheit bei horizontaler Spritzachse s-s aufgelagert. Die Spritzgießeinheit ist auf die in der Formschließeinheit F festgespannte Spritzgießform 18 axial auf- und absetzbar und dabei auf horizontalen Säulen 33 axial verschieblich gelagert. Die Säulen 33 sind am stationären Formträger 27 der Formschließeinheit F axial festgelegt und abgestützt. In einem beträchtlichen Abstand vom Formträger ist ein Stützbügel 36 vorgesehen, der die Säulen 33 mittels Klemmuffen 36a stützend umschließt. Letztere sind an den freien Enden von vertikalen Schenkeln 36d des Stützbügels 36 angeordnet, welche Schenkel 36d über einen horizontalen Steg 36c miteinander in Verbindung stehen. Der Stützbügel ist auf einer Stützpalette 31 des Maschinenfußes 34 aufgelagert. Trägerelemente 36b befestigen und zentrieren den Stützbügel 36 an der Stützpalette 31. Eine Profilschiene 13 von U-förmigem Querschnitt erstreckt sich über den axialen Mittelabschnitt des Plastifizierzylinders 10. Die Profilschiene 13 ist mittels einer oberen Deckplatte 13c zu einem Viereckrohr ergänzt und umschließt den rückseitig mit einer Ringnut 10' versehenen Plastifizierzylinder 10 allseitig mit Abstand. Der Plastifizierzylinder 10 ist in dem Viereckrohr mit Hilfe horizontaler Trägerstege 14 gehaltert, welche in vertikalen Schenkeln 13b der Profilschiene 13 abgestützt sind. Die horizontalen Trägerstege liegen tangential auf dem Plastifizierzylinder 10 auf und sind von den freien Enden von Haltebügeln 14a durchsetzt, welche den Plastifizierzylinder 10 umschlingen und die im zugehörigen Trägersteg mittels Schraubenmuttern 14b gesichert sind, wie insbesondere aus den Fign. 10,11 ersichtlich. Die aus Plastifizierzylinder 10 und Förderschnecke 28 gebildete Plastifiziereinheit P ist während des Spritzbetriebes, d.h. auch während ihrer axialen Bewegung beim Auf- und Absetzen von der Spritzgießform 18 auf einem ersten Stützlager G unter Zwischenschaltung friktionsmindernder Mittel abgestützt. Das rückwärtige Ende des Plastifizierzylinders 10 ist in einer zentralen Bohrung eines Trägerblockes 15 formschlüssig aufgenommen, der mit einer Zufuhreinrichtung (Vorratsbehälter 29) für das Kunststoffmaterial versehen ist. Im Trägerblock 15 ist der Plastifizierzylinder 10 mittels einer in die Ausnehmung (Ringnut 10') des Plastifizierzylinders eingreifenden, computergesteuerten Kupplung (K) axial festlegbar, wie insbesondere ans Fig. 24 ersichtlich. Die Kupplung K ist im Trägerblock 15 angeordnet und umfaßt diametral angeordnete, radial gesteuerte Riegel 72. Der mittels einer Arretiervorrichtung axial arretierbare Plastifizierzylinder 10 ist aus dem Trägerblock 15 durch eine rückwärts gerichtete Bewegung (Freisetzungs-Bewegung) des Trägerblockes (15) freisetzbar. Der auf dem ersten Stützlager G gießformseitig abgestützte und aus dem Trägerblock 15 freigesetzte Plastifizierzylinder 10 ist rückseitig axial unbeweglich und auf einem zweiten Stützlager G' abstützbar. Dieses zweite Stützlager G' ist im wesentlichen durch den horizontalen Steg 36c des Stützlagers 36 gebildet, auf dem die freigesetzte Plastifiziereinheit über den horizontalen Steg 13a der Profilschiene 13 aufliegt. Dabei ist diese Profilschiene mit ihren vertikalen Schenkeln 13b zwischen Zentrierrippen 36e des Stützbügels 36 zentriert. Bei der Freisetzungs-Bewegung ist das den Trägerblock 15 mit der Zufuhreinrichtung für das Kunststoffmaterial umfassende Restaggregat der Spritzgießeinheit über zwei mit Rollen 38 versehenen Stützsäulen 46 auf einer Palette 31 des Maschinenfußes 34 verfahrbar. In diesem Restaggregat sind die Fahrzylinder und der Einspritzzylinder von einer Abdeckung 30 umschlossen. Während der Freisetzungs-Bewegung ist die vom Restsggregat der Spritzgießeinheit abgekuppelte Plastifiziereinheit mit Hilfe eines stationären Hydraulikzylinders 36f axial arretiert, der mit einem Arretierzapfen seines Kolbens 36h in ein Arretierloch der Profilschiene 13 eingreift, wie insbesondere ans den Fign. 7,10 ersichtlich. Der Arretierzylinder 36f ist durch eine Bohrung im Steg 36c des Stützbügels 36 gebildet. Er wird über eine Hydraulikleitung 59 zeitgerecht, d.h. bei Einleitung eines Wechsels der Plastifiziereinheit P mit Druckmedium beaufschlagt. Die Arretierung ist durch eine den Arretierkolben in Ausgangsstellung zurückführende Rückstellfeder aufhebbar.

Im folgenden werden weitere Einzelheiten des Ausführungsbeispiels gemäß den Fign. 1 bis 7 beschrieben:

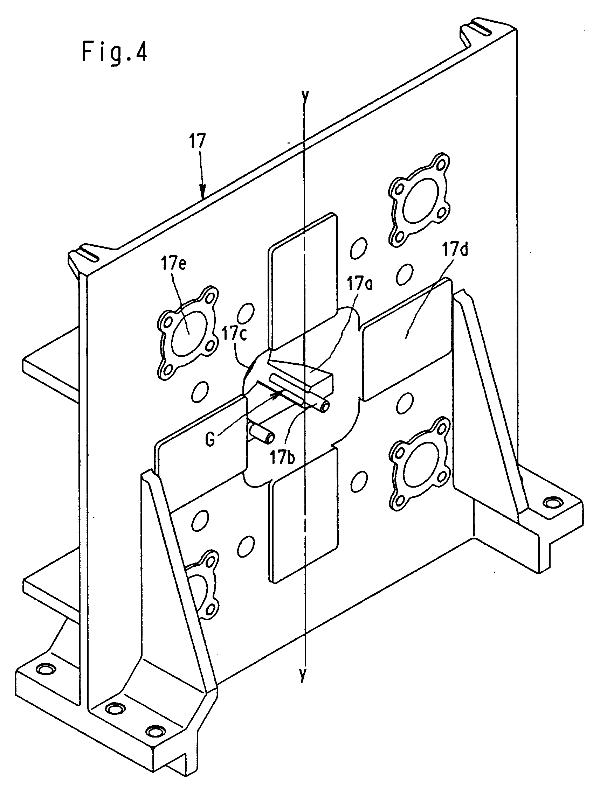

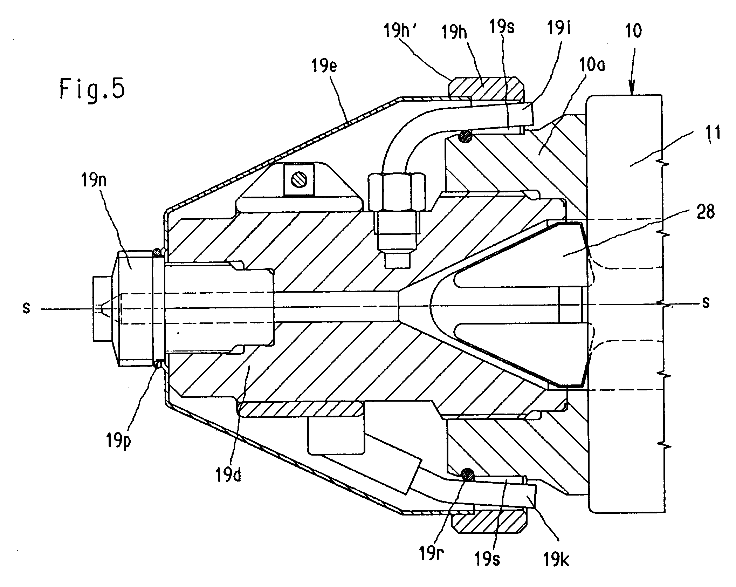

Der Plastifizierzylinder 10 ist mit Heizbändern 19b, einem Düsenkörper 19d und einer Düsenspitze 19n versehen. Als Stützorgan für die Plastifiziereinheit P ist ein Stützring 19h vorgesehen. Dieser sitzt auf dem Plastifizierzylinder 10 fest auf, indem er rückseitig durch eine Ringschulter dieses Plastifizierzylinders und vorderseitig durch einen Haltering 19r gesichert ist. Letzterer taucht in eine Ringnut des Plastifizierzylinders 10 ein. Der Düsenkörper 19d des Plastifizierzylinders ist von einer kegelstumpfförmigen Abdeckung 19e konzentrisch umschlossen, die den Düsenkörper 19d stirnseitig übergreift. Die Abdeckung ist mittels Haltering 19p an der Düsenspitze 19n festgelegt. Rückseitig zentriert sich die Abdeckung 19e am Stützring 19h, durch welchen elektrische Anschlußleitungen 19i,19k axial hindurchgeführt sind (Fig. 5). Das gießformseitige erste Stützlager G umfaßt zwei sich in Richtung der Spritzachse s-s erstreckende Legerstifte 17b. Diese sind unterhalb der Spritzachse s-s im wesentlichen innerhalb der Durchtrittsöffnung 17c der Aufspannplatte 17 für die Spritzgießform 18 und symmetrisch zur vertikalen Symmetrieebene y-y (Fig. 4) angeordnet. Dabei sind die Lagerstifte 17b in Ausformungen 17a des die Aufspannplatte 17 für die Spritzgießform 18 bildenden Gußstückes verankert. Diese Ausformungen treten aus vertikal verlaufenden Begrenzungsflächen der Durchtrittsöffnung 17c hervor. Die etwa zu zwei Drittel ihrer Länge in den Ausformungen 17a aufgenommenen Lagerstifte 17b sind stirnseitig mit einer Fase versehen. Der Stützring 19h weist zwischen seiner Umfangfläche und seiner senkrecht zur Spritzachse s-s stehenden Stirnkante eine Aufgleitfläche 19h' auf, die zur Spritzachse s-s etwa einen Winkel von 30° einschließt. Dadurch wird das Aufgleiten des Plastifizierzylinders auf die Fasen der Legerstifte 17b erleichtert.

Bei einer Position der Spritzgießeinheit entsprechend Fig. 1 fluchtet der Arretierkolben 36h des hydraulischen Zylinders 36f mit dem Arretierloch im Steg 13a der Profilschiene 13. Beim Wechsel der Plastifiziereinheit P wird zunächst der Arretierkolben 36h in das Arretierloch der Profilschiene 13 eingesteuert, wie aus den Fign. 1,2,7 ersichtlich. Zugleich werden der Plastifizierzylinder 10 und die Förderschnecke 28 von der restlichen Spritzgießeinheit nach Programm des Computers abgekuppelt. Zur Abkupplung des Plastifizierzylinders 10 werden die im Trägerblock 15 radial geführten Schieber (72 in Fig. 24) durch hydraulische Mittel aus der Ringnut 10' des Plastifizierzylinders 10 herausgedrückt. Durch einen Rückwärtshub der Fahrzylinder (70,71 in Fig. 24) wird der Trägerblock 15 vom axial arretierten Plastifizierzylinder 10 abgezogen und dadurch die Plastifiziereinheit aus dem Trägerblock freigesetzt, wie aus Fig. 6 ersichtlich. Beim Rückwärtshub der Fahrzylinder 70,71 rollt die restliche Spritzgießeinheit auf den Laufrollen 38 des Stützlagers 46 der Stützpalette 31 nach rückwärts. Bei Freisetzung der Plastifiziereinheit P kann diese um etwa 0,5 mm nach unten zur Auflage auf den Steg 36c des Stützbügels 36, also zur Abstützung auf das zweite Stützlager G' absinken. Dieses Absinken ist gleichbedeutend mit einer geringfügigen Kippbewegung der Plastifiziereinheit P über den Stützring 19h auf den Lagerstiften 17b um eine Achse z-z (Fig. 6). Beim Abtransport der Plastifiziereinheit P greifen Halteorgane eines Transporters zweckmäßigerweise derart an Transportlaschen 60 der Plastifiziereinheit P an, daß si- che eine Kipplage entsprechend Fig. 3 ergibt. Eine solche Kipplage ist nicht erforderlich, wenn die Plastifiziereinheit P bereits durch den Absetzhub von der Spritzgießform 18 ganz ans der Durchtrittsöffnung 17c axial herausgeführt worden ist. In diesem Falle ist ein Abtransport der Plastifiziereinheit P ohne Kippen, also in horizontaler Position möglich.

Im folgenden werden die Ausführungsbeispiele der Figuren 8 bis 20 beschrieben:

Im Ausführungsbeispiel der Figuren 8 bis 12 ist die Plastifiziereinheit P über Laufrollen 38 auf dem durch ein Blechprofil 39 gebildeten ersten Stützlager G abgestützt. Das Blechprofil 39 weist einen U-fömigen Querschnitt und somit einen horizontalen Steg 39a und vertikale Schenkel 39b auf. Die Laufrollen 38 sind in den vertikalen Schenkeln 13b an deren Innenseiten angeordnet. Im Bereich der Laufrollen 38 sind die vertikalen Schenkel 13b mit Verstärkungsplatten 41 armiert. Die Schenkel 39b des Blechprofils 39 sind von den durch zweifache Biegung versetzten vertikalen Rändern 41a dieser Verstärkungsplatten 41 mit Spiel übergriffen. Der Steg 13a der Profilschiene 13 weist einen Abstand von der unteren Mantellinie des Plastifizierzylinders 10 auf, der größer ist als der Durchmesser des Plastifizierzylinders. Dadurch ergibt sich ein von der Profilschiene 13 abgeschirmter Raum für die Endabschnitte 11e von Heizwendeln 11a sowie für Versorgungsleitungen 12 und deren Anschlußstecker 23. Wie ans der Figur 10 erkennbar, sind die Heizwendeln 11a von Spannschalen 11c umschlossen, die mit Spanneinrichtungen S miteinander verspannbar sind. Die Deckplatte 13c der Profilschiene 13 weist einen Abstand vom Plastifizierzylinder 10 auf, der etwa dem Abstand der vertikalen Schenkel 13b vom Plastifizierzylinder 10 entspricht. Das rückseitig an der Zufuhröffnung 10'' (Fig. 10) des Plastifizierzylinders 10 endende, durch Profilschiene 13 und Deckplatte 13c gebildete Viereckrohr ist stirnseitig durch eine Schutzplatte 22 und rückseitig durch eine Steckerplatte 16 abgedeckt, welch letztere die Stecker 23 der Versorgungsleitungen 12 der Widerstandsheizung trägt. Die für einen Wechsel rückseitig freigesetzte Plastifziereinheit ist über den Steg 13a ihrer Profilschiene 13 auf dem horizontalen Steg 36c des Stützbügels 36 abgestützt, welcher das zweite Stützlager G' bildet. Die Laufrollen 38 sind je ans einem stationären Lagerzapfen 38a und einem Laufring 38b mit zylindrischer Lauffläche zusammengesetzt. Der Lagerzapfen 38a ist mit einem koaxialen Befestigungszapfen im benachbarten Schenkel13d sowie in der Verstärkungsplatte 41 verankert. Der Laufring 38b überragt den Steg 13a über eine Ausnehmung geringfügig nach unten und liegt auf dem Steg 39a des Blechprofils 39 auf,wie insbesondere aus Fig. 11 erkennbar. Wird nach Abtransport einer Plastifizeinheit P eine neue, vom Depot kommende Plastifiziereinheit von oben auf die beiden Lager G,G' der Kunststoffspritzgießmaschine aufgesetzt, so zentrieren die übergreifenden Ränder 41a der Verstärkungsplatten 41 diese neue Plastifiziereinheit P gießformseitig auf dem ersten Stützlager G. Rückseitig, nämlich auf dem zweiten Stützlager G' wird die neue Plastifiziereinheit P zwischen den Zentrierrippen 36e zentriert, wie insbesondere aus Fig. 7 ersichtlich. Somit sichern die übergreifenden Ränder 41a im Bereich des ersten Stützlagers G und die Zentrierrippen 36e des Stützbügels 36 des zweiten Stützlagers die neu zugeführte rückseitig noch freie Plastifiziereinheit P auch gegen eine seitliche Verschiebung zum Beispiel bei unsachgemässer Behandlung durch das Personal. Das das erste Stützlager G bildende Blechprofil 39 ist über eine mit den Schenkeln 39b und dem Steg 39a verschweißte Platte 39d mittels Befestigungselementen 40 mit dem Formträger 27 verbunden.

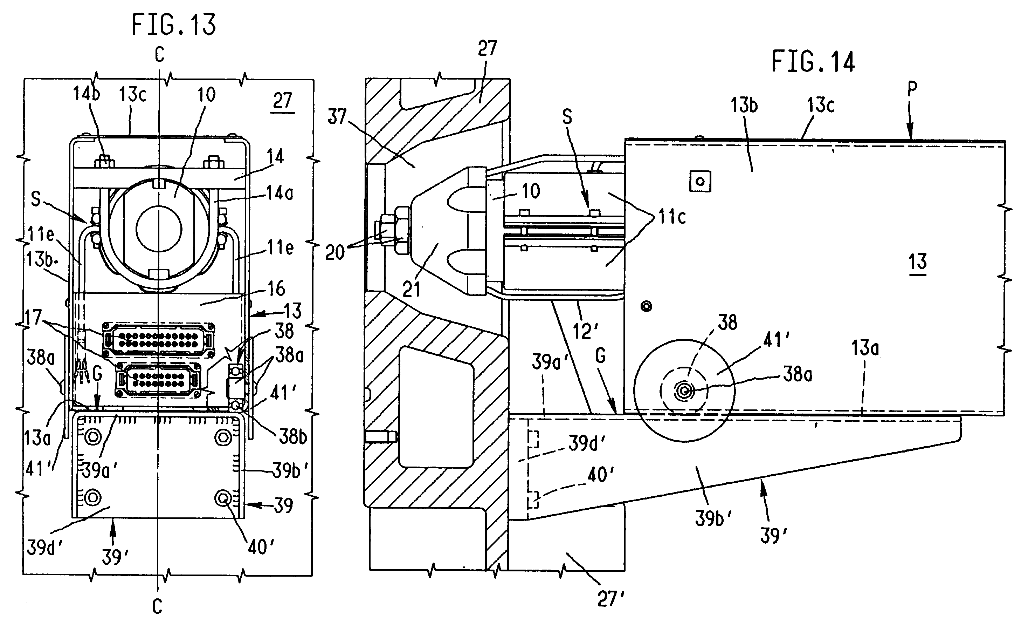

Die Variante gemäss den Fig. 13,14 unterscheidet sich vom Ausführungsbeispiel der Fig. 8 - 12 durch eine andere Ausbildung der Verstärkungsplatten und des Blechprofils. Als Verstärkungsplatten dienen Scheiben 41', die an den Aussenseiten der zugehörigen Schenkel 13b der Profilschiene 13 anliegen. Vertikale Schenkel 39b' eine Stützlagers 39' von etwa dreieckigem Grundriß sind von diesen Scheiben 41' zur Grobzentrierung übergriffen.

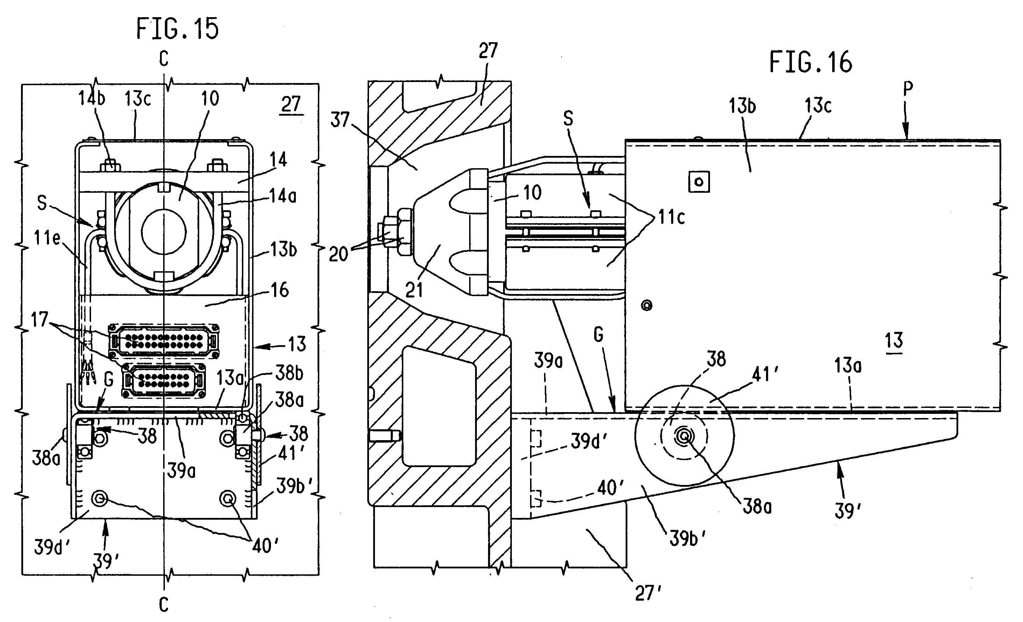

Die weitere Variante gemäss den Figuren 15,16 unterscheidet sich von der Variante der Figuren 13,14 dadurch, daß die Laufrollen 38 in den Schenkeln 39b' des Stützlagers 39' gelagert sind. Die Laufrollen durchsetzen den Steg 39a' über entsprechende Ausnehmungen nach oben und stützen je mit der Lauffläche ihres Laufringes 38b die Plastifiziereinheit P über den Steg 13a der Profilschiene 13.ab. Die Scheiben 41' übergreifen in diesem Falle die Schenkel 13b der Profilschiene 13 zur Grobzentrierung.

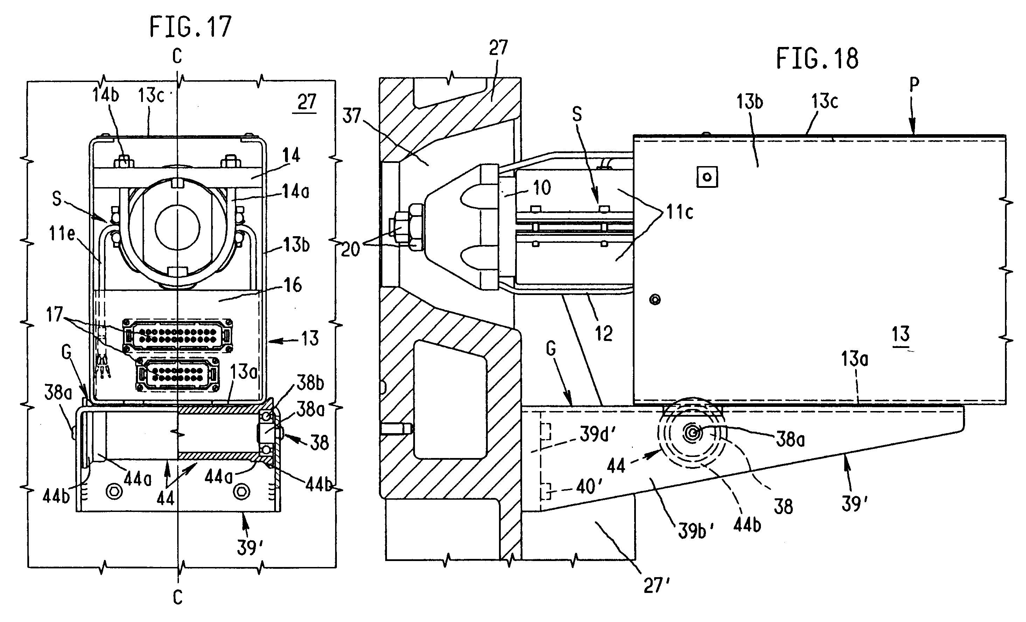

In der Variante der Fig. 17,18 sind die beiden, in den Schenkeln 39b' gelagerten Laufrollen 38 über eine Laufwalze 44 miteinander verbunden. Die Plastifiziereinheit P ist über die Endabschnitte 44a der Laufwalze 44 abgestützt, welche in Zentrierflansche 44b übergehen, wie insbesondere ans Fig.17 ersichtlich. Zur Zentrierung übergreifen die Zentrierflansche 44b die vertikalen Schenkel 13b der Profilschiene 13 geringfügig.

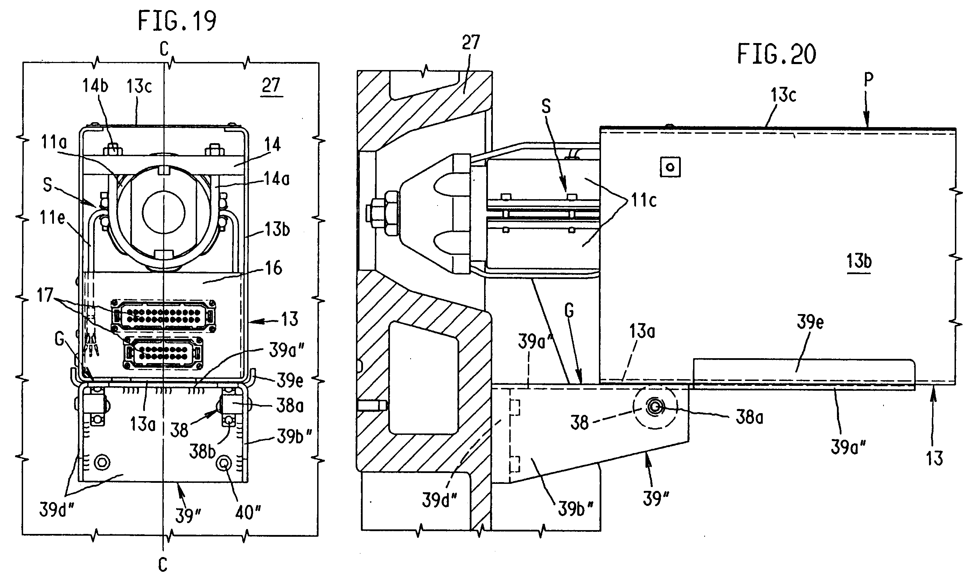

Die Variante gemäss den Fig. 19,20 unterscheidet sich von der Variante der Fig. 15,16 im wesentlichen dadurch, daß die Grobzentrierung beim Aufsetzen der Plastifiziereinheit P mit Hilfe von Zentrierrändern 39e bewirkt wird. Diese Zentrierränder sind vom Steg 39a'' eines Blechprofils 39'' um 90o Grad nach oben abgebogen. Das Blechprofil weist demzufolge einen ersten Abschnitt auf, in welchem vom horizontalen Steg 39a'' vertikale Schenkel 39b'' nach unten abgebogen sind. In einem weiteren rückwärtigen Abschnitt des Steges 39a'' sind die Zentrierränder 39e nach oben abgebogen.

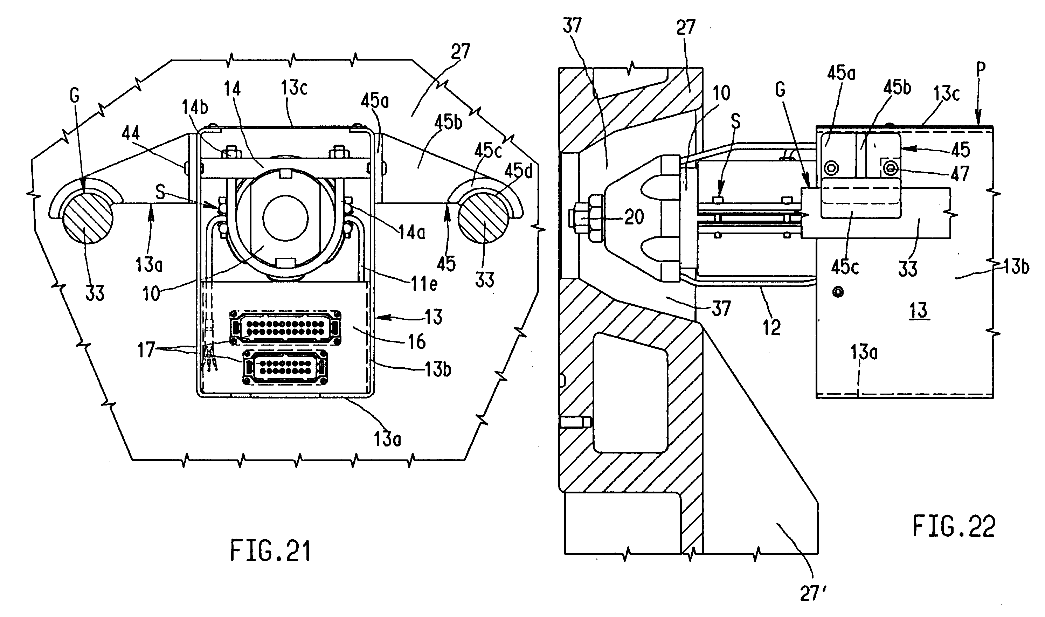

Im Ausführungsbeispiel der Fig. 21,22 ist die Plastifiziereinheit P mit Hilfe der Profilschiene 13 über horizontale Stützarme 45 auf den Säulen 33 angestützt, die insoweit als erstes Stützlager G dienen. Die Stützarme 45 sind an den vertikalen Schenkeln 13b der Profilschiene 13 befestigt. Mit Gleitschalen 45d armierte Stützschalen 45c der Stützarme 45 liegen im Gleitsitz auf den Mantelflächen der Säulen 33 auf. Die Stützarme 45 liegen über Anschlußflansche 45a an den Schenkeln 13b im Bereich eines Trägersteges 14 an und sind mit diesen mit Hilfe der Elemente 47 verschraubt. Im Ausführungsbeispiel der Fig. 23,24 bildet der Steg 13a der Profilschiene 13, wie in den Varianten der Fig.15-20 die Rollbahnen für die sich axial bewegende Plastifiziereinheit P.

Diese Rollbannen erstrecken sich entlang der durch die Biegekanten des Steges 13a zu den Schenkeln 13b versteiften Längsrändern des Steges 13a. Das erste Stützlager G ist durch zwei vertikal angeordnete Rohrprofile gebildet, die über die quaderförmige Stützpalette 31 auf dem Maschinefuß 34 abgestützt sind. Die als Stützsäulen 39''' ausgebildeten Rohrprofile bilden Drehlager für die Laufrollen 38.Die jeweils äußere, zur Spritzachse s-s parallele Wandung 39a''' der im Querschnitt rechteckigen Stützsäulen 39''' ist nach oben geringfügig verlängert und übergreift zur Grobzentrierung die Schenkel 13b der Profilschiene 13 mit Spiel. In den Fig.23, 24 ist auch verdeutlicht, wie die Spritzgießeinheit über die die Schutzabdeckung 30 auf den Stützlagern 46 abgestützt ist. Die Stützlager 46 nehmen die Laufrollen 38 drehbar über die Lagerzapfen 38a in parallelen Wandungen auf.Die Laufrollen 38 liegen an der unteren horizontalen Wandung der Schutzabdeckung 30 an, die durch die zugehörige Biegekante am Übergang zu ihrer vertikalen Wandung versteift ist.

Die stationären Kolben 70 (Fig. 24) der Fahrzylinder 71 sitzen fest auf den Säulen 33 auf. Der nicht rotierbare Kolben 73 des Einspritzzylinders 73,74 ist mit der Förderschnecke 28 nur für deren axialen Einspritzhub verbunden (Fig. 24).

Die den Plastifizierzylinder 10 im Trägerblock

axial festlegende, computergesteuerte Kupplung K ist in den zeichnerisch dargestellten Ausführungsbeispielen (z.B. Fig. 24) so ausgebildet, wie in den Patentanmeldungen P 35 13 411.9 und P 35 26 710.0 des gleichen Anmelders offenbart. Die Spritzgießeinheit als solche entspricht der in der Patentanmeldung P 34 47 707.1 offenbarten Spritzgießeinheit.

**Patentansprüche**

1. Spritzgießmaschine für Kunststoffe
   mit einer Spritzgießeinheit, die mittels eines Hydraulikzylinders (Fahrzylinder 70/71) auf die in einer Formschließeinheit (F) aufgenommene Spritzgießform (18) auf- und absetzbar ist,
   mit einem hydraulischen Zylinder (Einspritzzylinder 73,74) für den axialen Antrieb der im Plastifizierzylinder (10) der Spritzgießeinheit axial verschiebbaren und mit einem Rotationsantrieb versehenen Förderschnecke (28),
   mit einem das rückwärtige Ende des Plastifizierzylinders (10) in einer Bohrung formschlüssig aufnehmenden Trägerblock (15), der mit einer Zufuhreinrichtung (29) für das Kunststoffmaterial versehen ist, mit Mitteln zur axialen Festlegung des Plastifizierzylinders (10) im Trägerblock (15)
   und mit wenigstens einem Stützorgan am Plastifizierzylinder (10), mit welchem der Plastifizierzylinder (10) während des Auf- und Absetzens auf die bzw. von der Spritzgießform (18) über friktionsmindernde Mittel auf einem stationären Stützlager (erstes Stützlager (G) vertikal abgestützt ist,
   dadurch gekennzeichnet, daß im Trägerblock (15) eine in eine Ausnehmung (Ringnut 10') des Plastifizierzylinders 10) eingreifende, computergesteuerte Kupplung (K) vorgesehen ist,
   daß der mittels einer Arretiervorrichtung (Arretier Kolben 36h) axial arretierbare Plastifizierzylinder (10) aus dem Trägerblock (15) durch eine rückwärts gerichtete Bewegung (Freisetzungs-Bewegung) des Trägerblockes (15) freisetzbar ist,
   daß der auf dem ersten Stützlager ( G ) gießformseitig gestützte und aus dem Trägerblock (15) freigesetzte Plastifizierzylinder (10) rückseitig axial unbeweglich auf einem weiteren stationären Stützlager (zweites Stützlager G') abgestützt ist, und daß beide Stützlager (G;G') derart ausgebildet sind,
   daß der Plastifizierzylinder (10) aus den Stützlagern (G;G') mindestens nach oben abhebbar ist.

2. Spritzgießmaschine nach Patentanspruch 1, dadurch gekennzeichnet, daß das zweite Stützlager (G') durch einen stationären Stützbügel (36) gebildet ist.

3. Spritzgießmaschine nach einem der Patentansprüche 1 oder 2, dadurch gekennzeichnet, daß das erste Stützlager (G) durch zwei sich in Richtung der Spritzachse (s-s) erstreckende Lagerstifte (17b) gebildet ist, die unterhalb dieser Spritzachse (s-s) und symmetrisch zur vertikalen Symmetrieachse (y-y) des Formträgers (17) angeordnet und in Ausformungen (17a) des den Formträger (17) bildenden Gußstükkes innerhalb der Durchtrittsöffnung (17c) verankert sind, wobei ein konzentrischer Stützring (19a) des Plastifizierzylinders (10) auf den Lagerstiften (17b) aufliegt (Ausführungsbeispiel der Figuren 1-7).

4. Spritzgießmaschine nach Patentanspruch 2 oder 3, dadurch gekennzeichnet, daß eine Profilschiene (13) sich über den axialen Mittelabschnitt des Plastifizierzylinders (10) erstreckt und mit diesem mit Hilfe horizontaler, in vertikalen Schenkeln (13b) der Profilschiene (13) abgestützter Trägerstege (14) verbunden ist, in denen die freien Enden von den Plastifizierzylinder (10) umschlingenden Haltebügeln (14a) aufgenommen sind.

5. Spritzgießmaschine nach Patentanspruch 1 oder 2, dadurch gekennzeichnet, daß das erste Stützlager (G) durch ein U-förmiges Blechprofil (39 in Fig. 8,9,11,12; 39' in Fig. 13-18; 39'' in Fig. 19,20) gebildet und am stationären Formträger (27) der Formschließeinheit (F) befestigt ist und als friktionsmindernde Mittel Laufrollen (38) vorgesehen sind (Ausführungsbeispiele der Fig. 8-20).

6. Spritzgießmaschine nach Patentanspruch 1 oder 2, dadurch gekennzeichnet, daß das erste Stützlager (G) durch Säulen (33) gebildet ist, die mit den vorderen Enden am Formträger (27) und im übrigen über einen Stützbügel (36) auf dem Maschinefuß (34) abgestützt sind und daß die Profilschiene (13) über Stützarme (45) auf den Säulen (33) abgestützt ist (Fig. 21,22).

7. Spritzgießmaschine nach Patentanspruch 1 oder 2, dadurch gekennzeichnet, daß das erste Stützlager (G) durch auf dem Maschinenfuß (10) abgestützte, vertikale Stützsäulen (39''') gebildet ist, wobei Laufrollen (38) in parallelen Wandungen dieser Stützsäulen gelagert sind.

**Claims**

1. Injection-moulding machine for plastics materials, having an injection-moulding unit which is inserted into and withdrawn from an injection mould (18), which is received in a mould-closing unit (F), by means of a hydraulic cylinder (drive cylinder 7Ø/71),
with a hydraulic cylinder (injection cylinder (73, 74)) for the axial drive of the feed screw (28), which is axially displaceable in the plasticising cylinder (1Ø) of the injection-moulding unit and is provided with a rotary drive,
with a carrier block (15), which form-fittingly receives the rearward end of the plasticising cylinder (1Ø) in a bore and which is provided with a supply means (29) for the plastics material and with means for axially fixing the plasticising cylinder (1Ø) in the carrier block (15),
and with at least one support member at the plasticising cylinder (1Ø), by means of which the plasticising cylinder (1Ø) is vertically supported on a stationary support mount (G) by friction-reducing means during setting down onto, or lifting off the injection mould (18), **characterised in that** a computer-controlled coupling (K), which engages in a recess (annular groove 1Ø') of the plasticising cylinder (1Ø), is provided in the carrier block (15), that the plasticising cylinder (1Ø), which is axially arrestable by way of an arresting device (arresting piston 36h), is released from the carrier block (15) by a rearwardly oriented movement (release movement) of the carrier block (15),
that the plasticising cylinder (1Ø), which is supported on the first support mount (G) at the mould and released from the carrier block (15), is rearsidedly axially immovably supported on a further stationary support mount (second support mount G'), and that both support mounts (G; G') are constructed so as to permit lifting the plasticising cylinder (1Ø) off the support mounts (G; G'), at least in an upward direction.

2. Injection-moulding machine according to patent claim 1, **characterised in that** the second support mount (G') is composed of a stationary support yoke (36).

3. Injection-moulding machine according to one of the patent claims 1 or 2, **characterised in that** the first support yoke (G) is composed of two mounting pins (17b) extending in the direction of the injection axis (s-s), which are arranged underneath this injection axis (s-s) and symmetrically relative to the vertical plane of symmetry (y-y) of the mould carrier (17) end are anchored within the passage aperture (17c) in projections (17a) of the cost portion forming the mould carrier (17), whereby a concentric support ring (19a) of the plasticising cylinder (1Ø) is seated on the mounting pins (17b) (exemplary embodiment of Figures 1 - 7).

4. Injection-moulding machine according to patent claim 2 or 3, **characterised in that** a profiled rail (13) extends over the axial middle section of the plasticising cylinder (1Ø) and is connected thereto by means of horizontal carrier webs (14), which are supported in vertical legs (13b) of the profiled rail (13) and in which the free ends of the support yokes (14a), which surround the plasticising cylinder (1Ø), are received.

5. Injection-moulding machine according to patent claim 1 or 2, **characterised in that** the first support yoke (G) is formed by a U-shaped sheet-metal profile (39 in Fig. 8, 9, 11, 12; 39' in Fig. 13 - 18; 39" in Fig. 19, 2Ø) and mounted to the stationary mould carrier (37) of the mould-closing unit (F), and in that rollers (38) are provided as friction-reducing means (exemplary embodiments of Figs. 8 - 2Ø).

6. Injection-moulding machine according to patent claim 1 or 2, **characterised in that** the first support mount (G) is formed by columns (33), which are supported with the forward ends at the mould carrier (27) and otherwise via a support yoke (36) at the machine frame (34), and in that the profiled rail (13) is supported via support arms (45) at the columns (33) (Fig. 21.22).

7. Injection-moulding machine according to patent claim 1 or 2, **characterised in that** the first support mount (G) is formed by vertical support columns (39'''), which are supported at the machine base, with rollers (38) mounted in parallel walls of these support columns.

**Revendications**

1. Machine de moulage par injection pour matières plastiques, comprenant
une unité de moulage par injection pouvant être mise en place sur le moule (18) pour le moulage par injection, reçu dans une unité de fermeture de moule (F), et pouvant être déposée de ce moule au moyen d'un vérin hydraulique (vérin de translation 70/71),
un vérin hydraulique (vérin d'injection (73, 74)) pour l'avance axiale de la vis transporteuse (28) mobile en translation axiale dans le cylindre de plastification (10) de l'unité de moulage par injection et pourvue d'une commande de rotation,

un bloc porteur (15) recevant l'extrémité arrière du cylindre de plastification (10) avec complémentarité de formes dans un alésage et qui est pourvu d'un dispositif d'alimentation (29) pour la matière plastique, avec prévision de moyens pour le blocage axial du cylindre de plastification (10) dans le bloc porteur (15),

ainsi qu'au moins un organe de support prévu sur le cylindre de plastification (10) et par lequel le cylindre de plastification (10) est appuyé verticalement, avec interposition de moyens réduisant le frottement, sur un élément d'appui stationnaire (premier élément d'appui G), pendant la mise en place sur le moule (18) et la dépose par rapport à ce moule,

caractérisée en ce que le bloc porteur (15) contient un accouplement (K) commandé par ordinateur et s'engageant dans un évidement (gorge annulaire 10') du cylindre de plastification (10),

que le cylindre de plastification (10), blocable axialement au moyen d'un dispositif d'arrêt (piston d'arrêt 36h), peut être dégagé du bloc porteur (15) par un mouvement vers l'arrière (mouvement de dégagement) du bloc porteur (15),

que le cylindre de plastification (10), après avoir été dégagé du bloc porteur 115) et pendant qu'il est appuyé du côté du moule sur le premier élément d'appui (G), est appuyé à l'arrière, à l'état immobile axialement, sur un autre élément d'appui stationnaire (second élément d'appui G'), et que les deux éléments d'appui (G; G') sont réalisés de manière que le cylindre de plastification (10) puisse au moins être retiré des éléments d'appui (G; G') par soulèvement.

2.  Machine de moulage par injection selon la revendication 1, caractérisée en ce que le second élément d'appui (G') est formé par un étrier support (36) stationnaire.

3.  Machine de moulage par injection selon la revendication 1 ou 2, caractérisée en ce que le premier élément d'appui (G) est formé par deux broches d'appui (17b) orientées dans le sens de l'axe d'injection (s-s), qui sont disposées sous cet axe d'injection (s-s) et symétriquement par rapport au plan vertical de symétrie (y-y) du porte-moule (17) et sont ancrées dans des renflements percés (17a) de la pièce en fonte formant le porte-moule (17), à l'intérieur de l'ouverture de passage (17c) de ce porte-moule, le cylindre de plastification (10) reposant sur les broches d'appui (17b) par un anneau d'appui concentrique (19a) de ce cylindre (exemple de réalisation selon les figures 1-7).

4.  Machine de moulage par injection selon la revendication 2 ou 3, caractérisée en ce qu' une gouttière (13) recouvre le tronçon axial central du cylindre de plastification et est reliée à lui à l'aide d'entretoises de soutien (14) orientées horizontalement et appuyées dans des ailes verticales (13b) de la gouttière (13), entretoises dans lesquelles sont reçues les extrémités libres d'étriers de maintien (14a) entourant le cylindre de plastification (10).

5.  Machine de moulage par injection selon la revendication 1 ou 2, caractérisée en ce que le premier élément d'appui (G) est formé par un profilé en tôle de forme en U (39 sur les figures 8, 9, 11, 12; 39' sur les figures 13 - 18; 39'' sur les figures 19, 20) et est fixé au porte-moule stationnaire (27) de l'unité de fermeture de moule (F), et les moyens réduisant le frottement sont des roulettes (38) (exemples de réalisation des figures 8 - 20).

6.  Machine de moulage par injection selon la revendication 1 ou 2, caractérisée en ce que le premier élément d'appui (G) est formé par des colonnes (33) appuyées par les extrémités avant sur le porte-moule (27) et appuyées par ailleurs sur le socle (34) de la machine par l'intermédiaire d'un étrier support (36), et que la gouttière (13) est appuyée sur les colonnes (33) par l'intermédiaire de bras de support (45) (figures 21, 22).

7.  Machine de moulage par injection selon la revendication 1 ou 2, caractérisée en ce que le premier élément d'appui (G) est formé par des colonnes de support (39''') verticales appuyées sur le socle (34) de la machine, avec montage de roulettes (38) dans des parois parallèles de ces colonnes.

Fig.1

Fig.2

Fig.3

Fig.4

Fig.5

EP 0 198 410 B1

Fig.6

Fig.7

## FIG.8

## FIG.9

FIG.10

FIG.12

FIG.11

FIG.14

FIG.13

FIG.15

FIG.16

EP 0 198 410 B1

FIG.18

FIG.17

FIG.19

FIG.20

EP 0 198 410 B1

FIG.22

FIG.21

FIG.23

FIG.24